# EUROPÄISCHE PATENTSCHRIFT

(11) **EP 2 948 347 B1**
(45) Veröffentlichungstag und Bekanntmachung des Hinweises auf die Patenterteilung: **27.05.2020**
(21) Anmeldenummer: 13702600.1
(22) Anmeldetag: 24.01.2013
(51) Int. Cl.: B60S 1/34

(54) **WISCHERARM**
WIPER ARM
BRAS D'ESSUIE-GLACE

(43) Veröffentlichungstag der Anmeldung: 02.12.2015
(73) Patentinhaber: Robert Bosch GmbH, 70442 Stuttgart (DE)
(72) Erfinder: RAPP, Harald, 77815 Buehl (DE); VIX, Patrick, F-67850 Offendorf (FR)
(86) Internationale Anmeldenummer: PCT/EP2013/051300
(87) Internationale Veröffentlichungsnummer: WO 2014/114334

(56) Entgegenhaltungen:
- EP-B1- 1 520 759
- WO-A1-93/08047
- DE-A1-102009 048 414
- JP-A- 2006 007 971

## Beschreibung

Die Erfindung betrifft einen Wischerarm. Insbesondere betrifft die Erfindung einen Wischerarm mit einer Schlauchleitung zum Einsatz in einem Kraftfahrzeug.

### Stand der Technik

Um an einem Kraftfahrzeug eine Sichtscheibe, insbesondere eine Frontscheibe, zu reinigen, ist ein Wischersystem vorgesehen. Das Wischersystem umfasst eine Antriebseinrichtung, einen Wischerarm und ein Wischerblatt. Die Antriebseinrichtung stellt eine Dreh- bzw. Schwenkbewegung bereit, die mittels des Wischerarms derart an das Wischerblatt übermittelt wird, dass das Wischerblatt in einem Wischbereich oszillierend über die Sichtscheibe geführt wird. Feuchtigkeit und Verunreinigungen lassen sich so von der Sichtscheibe entfernen.

Unter bestimmten Umständen ist es erforderlich, die Sichtscheibe für das Wischen anzufeuchten bzw. mit einer Reinigungsflüssigkeit zu spülen. Das Wischersystem kann daher ein Spülsystem umfassen, das die Reinigungsflüssigkeit im Bereich des Wischerblatts ausstößt. Dabei umfasst das Spülsystem üblicherweise eine Schlauchleitung, die entlang des Wischerarms geführt ist. Der Wischerarm umfasst üblicherweise ein Klappgelenk, um ein Abklappen des Wischerarms mit dem Wischerblatt von der Sichtscheibe zu ermöglichen. EP 1 520 759 B1 zeigt einen Wischerarm mit einer Schlauchleitung zum Einsatz an einem Kraftfahrzeug.

DE 198 54 309 A1 zeigt ein Wischersystem mit einem Wischerarm, der die Schlauchleitung teilweise ersetzt.

Das Klappgelenk teilt den Wischerarm in einen Koppelhebel und einen Führungshebel. Um die Schlauchleitung im Bereich des Klappgelenks zu führen, kann die Schlauchleitung außerhalb des Wischerarms angeordnet sein. In dieser Position ist die Schlauchleitung jedoch exponiert und es besteht ein erhöhtes Risiko einer Beschädigung der Schlauchleitung. Außerdem ist das Führen der Schlauchleitung außerhalb des Wischerarms häufig aus ästhetischen Gründen unerwünscht. Soll die Schlauchleitung derart am Wischerarm geführt sein, dass die hinter bzw. in dem Wischerarm verborgen ist, so kann im Bereich des Klappgelenks eine gegenseitige Behinderung der Schlauchleitung und eines Federelements auftreten, das ein Drehmoment zwischen dem Koppelhebel und dem Führungshebel ausübt. Das Federelement und die Schlauchleitung können axial versetzt angeordnet sein, falls ein Stift, an dem das Federelement am Koppelhebel angreift, nicht die gesamte Breite des Koppelhebels einnimmt. In diesem Fall ist es jedoch schwierig, den Koppelhebel durch Prägen und Biegen aus einem Blech herzustellen und es muss üblicherweise auf ein Druckgusselement zurückgegriffen werden, welches in der Herstellung deutlich teurer ist,

Als gattungsbildender Stand der Technik ist weiterhin die DE 10 2009 048 414 A1 bekannt geworden.

WO 93 08047 A1 betrifft einen Wischerarm mit einem Federelement und einer Schlauchleitung, die im Bereich eines Klappgelenks axial versetzt geführt sind. Die Führung wird durch ein Befestigungsteil bewirkt, das mit einer Wischerwelle verschraubt wird.

JP 2006 007971 A zeigt einen Wischerarm, bei dem eine axiale Position einer Schlauchleitung im Bereich eines Koppelhebels mittels eines separaten Fixierelements festgelegt ist.

DE 10 2009 048 414 A1 betrifft einen Wischerarm mit einem Klappgelenk, bei dem eine axiale Position einer Schlauchleitung im Bereich eines Führungshebels mittels eines Fixierelements festgelegt ist.

EP 1 520 759 A1 schlägt einen Wischerarm ohne Klappgelenk vor.

Der Erfindung liegt daher die Aufgabe zugrunde, einen Wischerarm mit verdeckt angeordneter Schlauchleitung bereitzustellen, der einfach und kostengünstig herstellbar ist.

Die Erfindung löst diese Aufgabe mittels eines Wischerarms mit den Merkmalen von Anspruch 1. Unteransprüche geben bevorzugte Ausführungsformen wieder.

### Offenbarung der Erfindung

Ein Wischerarm umfasst einen Koppelhebel zur Befestigung an einer drehbaren Wischerwelle, einen Führungshebel zur Anbringung eines Wischerblatts und ein Klappgelenk mit einer Klappachse zur Verbindung des Führungshebels mit dem Koppelhebel. Der Koppelhebel weist ein Profil mit U-förmigem Querschnitt und einen Stift auf, der sich zwischen den gegenüber liegenden Schenkeln des Profils erstreckt. Ferner umfasst der Wischerarm ein Federelement, das mit dem Stift in Eingriff steht, um über das Klappgelenk ein Drehmoment zwischen dem Koppelhebel und dem Führungshebel auszuüben, und eine Schlauchleitung zur Leitung einer Flüssigkeit entlang des Wischerarms.

Die Schlauchleitung und das Federelement sind im Bereich des Klappgelenks im Profil des Koppelhebels angeordnet.

Durch die axial versetzte Anordnung des Federelements und der Schlauchleitung im Bereich des Klappgelenks kann die Schlauchleitung vollständig geschützt bzw. unsichtbar innerhalb des Wischerarms verlegt sein. Eine gegenseitige Behinderung der Schlauchleitung und des Federelements kann ausgeschlossen sein. Außerdem kann die Schlauchleitung so verlegt sein, dass sie auch beim Abklappen des Wischerarms am Klappgelenk keiner übermäßigen Beugung oder Streckung unterworfen ist.

Der Wischerarm der Erfindung umfasst ferner ein separates Fixierelement zur axialen Trennung der Schlauchleitung von dem Federelement im Bereich des Klappgelenks wobei das Fixierelement separat ausgeführt ist, sodass an einer bereits montierten Funktionsgruppe, die den Koppeleinheit, den Führungshebel, das Klappgelenk und das Federelement umfasst die Schlauchleitung und das Fixierelement angebracht werden kann, dadurch gekennzeichnet dass das Führungselement eine Aussparung zum Eingriff mit dem Stift aufweist. Dabei kann das Fixierelement ausschließlich die axialen Kräfte im Bereich des Stifts bzw. der Klappachse aufnehmen, so dass das Fixierelement schwach dimensioniert sein kann. Das Fixierelement ist nachträglich am Wischerarm anbringbar, so dass Montage- bzw. Demontagearbeiten am Wischerarm mit geringem Aufwand durchführbar sein können.

In einer weiter bevorzugten Ausführungsform sind am Koppelhebel oder am Fixierelement Rastelemente zur Befestigung des Fixierelements am Koppelhebel vorgesehen. Das Fixierelement kann so ohne den Einsatz von Werkzeug am Koppelhebel gesichert werden und eine werkzeuglose Demontage des Fixierelements kann unterstützt sein.

Das Fixierelement weist eine Aussparung zum Eingriff mit dem Stift auf. Dadurch kann das Fixierelement sicher am Wischerarm befestigt werden und eine korrekte Einbauposition des Fixierelements, in der die Separation der Schlauchleitung von dem Federelement bewirkt wird, kann durch die Aussparung erzwungen sein. Eine falsche oder ineffiziente Anbringung des Fixierelements am Wischerarm kann so verhindert sein.

In einer besonders bevorzugten Ausführungsform umfasst das Fixierelement zwei Aussparungen zum Eingriff mit dem Stift auf unterschiedlichen Seiten des Federelements. Die Gefahr einer inkorrekten Montage oder eines Fixierelements, das dem Wischerarm nicht zugeordnet ist, kann somit weiter verringert sein.

In einer Ausführungsform verläuft die Schlauchleitung zwischen der Klappachse und dem Stift hindurch. Ein Abheben der Schlauchleitung vom Wischerarm im Bereich des Klappgelenks bzw. des Stifts kann so verhindert sein.

Bevorzugterweise weist der Führungshebel einen Querschnitt mit einem Profil auf, in dem die Schlauchleitung aufgenommen ist. Insbesondere kann das Profil ebenfalls U-förmig sein, wodurch auch der Führungshebel einfach und kostengünstig aus einem flächigen Material, insbesondere einem Blech, herstellbar sein kann.

Bevorzugterweise ist auch der Koppelhebel aus einem Blech herstellbar. Ein Verfahren zur Montage des beschriebenen Wischerarms umfasst Schritte des Bereitstellens der montierten Funktionsgruppe aus Koppelhebel, Führungshebel, Klappgelenk und Federelement, des Verlegens der Schlauchleitung im Bereich des Klappgelenks und des Anbringens des Fixierelements, um die Schlauchleitung vom Federelement axial zu trennen.

Die Montage kann rasch und einfach erfolgen, so dass eine Einarbeitung einer Montageperson unaufwändig sein kann. Durch die beschriebene Formgebung des Wischerarms können Montagefehler ausgeschlossen sein. Gegebenenfalls kann eine bereits montierte Funktionsgruppe um die Schlauchleitung und das Fixierelement ergänzt werden, um eine Spülfunktion an einer Wischeranlage nachzurüsten.

Das Anbringen umfasst bevorzugterweise Schritte des Eingreifens des Fixierelements mit dem Stift und des Einrastens des Fixierelements am Koppelhebel.

Durch diese Art der Anbringung des Fixierelements kann eine einfache und dauerhafte Anbringung erreicht werden. Dadurch kann eine haptische Rückmeldung an eine Montageperson erfolgen, die sich so leicht von der korrekten Anbringung des Fixierelements am Wischerarm überzeugen kann.

### Kurze Beschreibung der Figuren

Die Erfindung wird nun mit Bezug auf die beigefügten Figuren genauer beschrieben, in denen:
Figur 1 ein Wischersystem;
Figur 2 einen Abschnitt des Wischerarms aus Figur 1; und
Figur 3 Verfahrensschritte während der Montage einer Schlauchleitung an einem Wischerarm
darstellt.

### Genaue Beschreibung von Ausführungsbeispielen

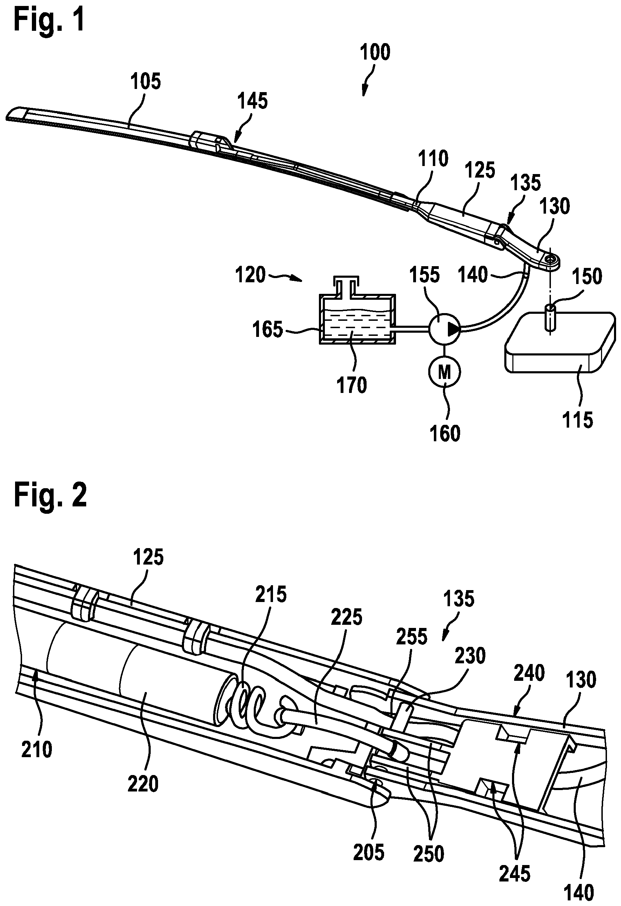

Figur 1 zeigt ein Wischersystem 100 zum Einsatz an einem Kraftfahrzeug, insbesondere einem Personenkraftfahrzeug. Das Wischersystem 100 umfasst ein Wischerblatt 105, einen Wischerarm 110, eine Antriebeinrichtung 115 und ein Spülsystem 120.

Der Wischerarm 110 umfasst einen Führungshebel 125 und einen Koppelhebel 130, die mittels eines Klappgelenks 135 miteinander verbunden sind. Dabei kann der Führungshebel 125 auch mehrgliedrig aufgebaut sein. Ferner umfasst der Wischerarm 110 eine Schlauchleitung 140, die am Wischerarm 110 entlang führt, um Waschdüsen 145 im Bereich des Wischerblatts 105 mit dem Spülsystem 120 zu verbinden.

Der Koppelhebel 130 ist dazu eingerichtet, mit einer Abtriebswelle 150 der Antriebseinrichtung 115 verbunden zu werden. Die Antriebseinrichtung 115 ist dazu eingerichtet, die Abtriebswelle 150 hin- und her zu drehen, im mittels des Wischerarms 110 das Wischerblatt 105 über eine Sichtscheibe zu führen und diese dadurch zu reinigen.

Das Spülsystem 120 ist in seinen Komponenten nur schematisch dargestellt und umfasst eine Pumpe 155, die mittels eines Elektromotors 160 antreibbar ist und aus einem Vorratsbehälter 165 gespeist werden kann. Der Vorratsbehälter 165 hält eine vorbestimmte Menge von Flüssigkeit 170 zum Spülen bzw. Anfeuchten der Sichtscheibe im Bereich der Waschdüsen 145 bereit. Die Flüssigkeit 170 basiert üblicherweise auf einer wässrigen Lösung der Reinigungs- oder Frostschutzmittel beigemengt sein kann.

Figur 2 zeigt einen Abschnitt des Wischerarms 110 aus Figur 1. Die Ansicht auf dem Wischerarm 110 erfolgt von unten, ungefähr aus der Perspektive der Antriebseinrichtung 115. Dargestellt ist der Wischerarm 110 im Bereich des Klappgelenks 135.

Im Bereich des Klappgelenks 135 weisen sowohl der Führungshebel 125 als auch der Koppelhebel 130 ein U-förmiges Profil auf. Dabei liegt der Koppelhebel 130 innerhalb des Führungshebels 125 so, dass die zueinander parallelen Abschnitte der beiden U-förmigen Profile paarweise aneinander anliegen. Das Klappgelenk 135 umfasst eine Klappachse 205, die durch alle vier parallelen Schenkel der Profile des Führungshebels 125 und des Koppelhebels 130 verläuft.

Um über das Klappgelenk 135 hinweg ein Drehmoment zwischen dem Koppelhebel 130 und dem Führungshebel 125 zu bewirken, ist ein Federelement 210 vorgesehen. Das Federelement 210 umfasst eine Zugfeder 215, die optional in einem Verklemmschutz 220 verläuft und ebenfalls optional durch einen C-Bogen 225 verlängert ist. Das Federelement 210 kann eine Stielösen-Zugfeder sein, wobei der C-Bogen entfallen kann.

An seiner nicht dargestellten, linken Seite stützt sich das Federelement 210 in praktisch beliebiger Weise am Führungshebel 125 ab. An seiner rechten Seite steht das Federelement 210 mit einem Stift 230 in Eingriff, der am Koppelhebel 130 befestigt ist. Der Stift 230 verläuft vorzugsweise parallel zur Klappachse 205 und erstreckt sich zwischen den gegenüber liegenden Schenkeln des U-förmigen Profils des Koppelhebels 130.

Die Schlauchleitung 140 verläuft innerhalb der U-förmigen Profile des Koppelhebel 130 und des Führungshebels 125, wobei sie bevorzugterweise im Bereich des Klappgelenks 135 zwischen der Klappachse 205 und dem Stift 230 hindurch verläuft. Dadurch ist die Schlauchleitung 140 in diesem Bereich unsichtbar bzw. verdeckt. In der dargestellten, bevorzugten Ausführungsform sind am Führungshebel 125 eines oder mehrere Halteelemente 235 angeordnet, um die Schlauchleitung 140 innerhalb des U-förmigen Profils des Führungshebels 125 zu fixieren.

Seitens des Koppelhebels 130 ist ein Fixierelement 240 vorgesehen, um die Schlauchleitung 140 zu fixieren. Dazu umfasst das Fixierelement 240 vorzugsweise Rastelemente 245, um am Koppelhebel 130 einzurasten. In einer anderen Ausführungsform können die Rastelemente 245 auch am Koppelhebel 130 ausgebildet sein. Es können auch korrespondierende Rastelemente 245 am Fixierelement 240 und am Koppelhebel 130 angeordnet sein. Dabei ist die Zahl der Rastelemente 245 variabel. Die Rastelemente 245 sind bevorzugterweise vom lösbaren Typ, so dass sie ohne den Einsatz von Spezialwerkzeug und bevorzugterweise vollständig ohne den Einsatz von Werkzeug lösbar sind, um das Fixierelement 240 mit wenig Aufwand vom Koppelhebel 130 entfernen zu können.

Das Fixierelement 240 erstreckt sich bevorzugterweise zwischen den einander gegenüber liegenden Schenkeln des U-förmigen Profils des Koppelhebels 130, so dass die Lage der Schlauchleitung 140 zwischen dem Fixierelement 240 und dem Verbindungsabschnitt des U-förmigen Profils des Koppelhebels 130 definiert ist.

In einer bevorzugten Ausführungsform umfasst das Fixierelement 240 zusätzlich einen oder, wie dargestellt, zwei Ausleger 250, die sich in Richtung des Stifts 230 erstrecken und auf unterschiedlichen axialen Seiten des Federelements 210 liegen. Aussparungen 255 in den Auslegern 250 sind zum Eingriff des Stifts 230 eingerichtet. Dazu sind die Aussparungen 255 einseitig geöffnet und so geformt, dass das Fixierelement 240 an den Stift 230 eingerastet bzw. angeclipst werden kann.

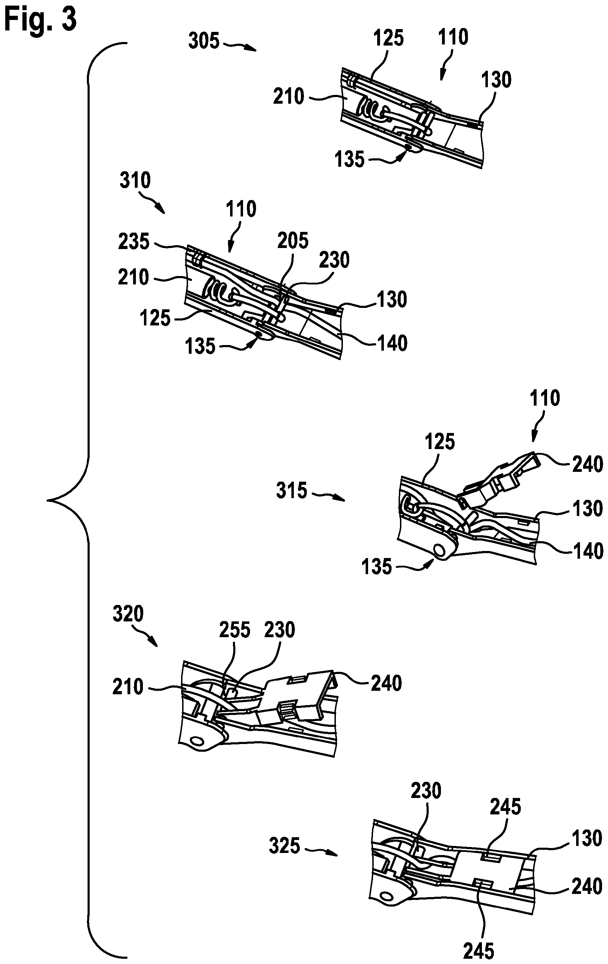

Eine Montage des Fixierelements 240 aus Figur 2 wird nachfolgend mit Bezug auf Figur 3 beschrieben. Dargestellt sind Verfahrensschritte 305 bis 325, die in dieser Reihenfolge durchlaufen werden, um das Fixierelement 240 am Wischerarm 110 anzubringen. Zur Demontage des Fixierelements 240 ist die umgekehrte Reihenfolge erforderlich.

In einem ersten Schritt 305 wird eine Funktionsgruppe des Wischerarms 110 bereitgestellt, die den Koppelhebel 130, den Führungshebel 125, das Klappgelenk 135 und das Federelement 210 in montiertem Zustand umfasst. Die dargestellte Funktionsgruppe kann in diesem Zustand lackiert werden.

In einem folgenden Schritt 310 wird die Schlauchleitung 140 am Wischerarm 110 montiert. Dabei liegt die Schlauchleitung 140 in den U-förmigen Profilen des Koppelhebels 130 bzw. des Führungshebels 125. Am Führungshebel 125 wird die Schlauchleitung 140 bevorzugterweise mittels eines Halteelements 235 fixiert. Im Bereich des Klappgelenks 135 verläuft die Schlauchleitung 140 zwischen der Klappachse 205 und dem Stift 230. Bezüglich des Federelements 210 ist die Schlauchleitung 140 axial versetzt.

Anschließend wird in einem Schritt 315 das Fixierelement 240 bereitgestellt, um die Schlauchleitung 140 im Bereich des Klappgelenks 135 am Wischerarm 110 zu fixieren.

Zunächst werden in einem Schritt 320 die Aussparungen 255 der Ausleger 250 des Rastelements 245 in den Stift 230 eingeclipst. Sind, wie in der Darstellung, zwei Ausleger 250 mit zugeordneten Aussparungen 255 vorgesehen, so liegen die Ausleger 250 bevorzugterweise auf einander gegenüber liegenden Seiten des Federelements 210 am Stift 230.

In einem abschließenden Schritt 325 wird das Fixierelement 340 in einer Schwenkbewegung um den Stift 230 nach unten geklappt, bis es im Koppelhebel 130 aufgenommen ist. In dieser Stellung rasten bevorzugterweise die Rastelemente 245 ein, die das Fixierelement 340 am Koppelhebel 130 befestigen.

## Patentansprüche

1. Wischerarm (110), umfassend:
- einen Koppelhebel (130) zur Befestigung an einer drehbaren Wischerwelle (150);
- einen Führungshebel (125) zur Anbringung eines Wischerblatts (105);
- ein Klappgelenk (135) mit einer Klappachse (205) zur Verbindung des Führungshebels (125) mit dem Koppelhebel (130);
- wobei der Koppelhebel (130) ein Profil mit einem U-förmigen Querschnitt und einen Stift (230) aufweist, der sich zwischen den gegenüber liegenden Schenkeln des Profils erstreckt;
- ein Federelement (210), das mit dem Stift (230) in Eingriff steht, um über das Klappgelenk (135) ein Drehmoment zwischen dem Koppelhebel (130) und dem Führungshebel (125) auszuüben; und
- eine Schlauchleitung (140) zur Leitung einer Flüssigkeit (170) entlang des Wischerarms (110),
- wobei die Schlauchleitung (140) und das Federelement (210) im Bereich des Klappgelenks (135) im Profil des Koppelhebels (130) angeordnet sind,
- ein Fixierelement (240) zur axialen Trennung der Schlauchleitung (140) von dem Federelement (210) im Bereich des Klappgelenks (135),
wobei
- das Fixierelement (240) separat ausgeführt ist, sodass an einer bereits montierten Funktionsgruppe, die den Koppelhebel (130), den Führungshebel (125) das Klappgelenk (135) und das Federelement (210) umfasst, die Schlauchleitung (140) und das Fixierelement (240) angebracht werden kann.
**dadurch gekennzeichnet, dass**
das Fixierelement (240) eine Aussparung (255) zum Eingriff mit dem Stift (230) aufweist.

2. Wischerarm (110) nach Anspruch 1, wobei am Koppelhebel (130) oder am Fixierelement (240) Rastelemente (245) zur Befestigung des Fixierelements (240) am Koppelhebel (130) vorgesehen sind.

3. Wischerarm (110) nach einem der vorangehenden Ansprüche, wobei das Fixierelement (240) zwei Aussparungen (255) zum Eingriff mit dem Stift (230) auf unterschiedlichen Seiten des Federelements (210) aufweist.

4. Wischerarm (110) nach einem der vorangehenden Ansprüche, wobei die Schlauchleitung (140) zwischen der Klappachse (205) und dem Stift (230) hindurch verläuft.

5. Wischerarm (110) nach einem der vorangehenden Ansprüche, wobei der Führungshebel (125) einen Querschnitt mit einem Profil aufweist, in dem die Schlauchleitung (140) aufgenommen ist.

6. Wischerarm (110) nach einem der vorangehenden Ansprüche, wobei der Koppelhebel (130) aus einem Blech herstellbar ist.

7. Verfahren (300) zur Montage eines Wischerarms (110) nach einem der Ansprüche 1 bis 7, folgende Schritte umfassend:
- Bereitstellen (305) der montierten Funktionsgruppe aus Koppelhebel (130), Führungshebel (125), Klappgelenk (135) und Federelement (210);
- Verlegen (310) der Schlauchleitung (140) im Bereich des Klappgelenks (135); und
- Anbringen (320, 325) des Fixierelements (240), um die Schlauchleitung (140) vom Federelement (210) axial zu trennen,
**gekennzeichnet durch** folgende Schritte:
- Eingreifen (320) des Fixierelements (240) mit dem Stift (230); und
- Einrasten (325) des Fixierelements (240) am Koppelhebel (130).

## Claims

1. Wiper arm (110) comprising:
- a coupling lever (130) for fastening to a rotatable wiper shaft (150);
- a guide lever (125) for attaching a wiper blade (105);
- a folding joint (135) having a folding axis (205) for connecting the guide lever (125) to the coupling lever (130);
- wherein the coupling lever (130) has a profile with a U-shaped cross section, and a pin (230) which extends between the opposite legs of the profile;
- a spring element (210) which is in engagement with the pin (230) in order to exert a torque between the coupling lever (130) and the guide lever (125) via the folding joint (135); and
- a hose line (140) for conducting a liquid (170) along the wiper arm (110),
- wherein the hose line (140) and the spring element (210) are arranged in the profile of the coupling lever (130) in the region of the folding joint (135),
- a fixing element (240) for axially separating the hose line (140) from the spring element (210) in the region of the folding joint (135),
wherein
- the fixing element (240) is formed separately such that the hose line (140) and the fixing element (240) can be attached to a functional group which is already mounted and comprises the coupling lever (130), the guide lever (125), the folding joint (135) and the spring element (210),
**characterized in that**
the fixing element (240) has a recess (255) for engagement with the pin (230).

2. Wiper arm (110) according to Claim 1, wherein latching elements (245) for fastening the fixing element (240) to the coupling lever (130) are provided on the coupling lever (130) or on the fixing element (240).

3. Wiper arm (110) according to either of the preceding claims, wherein the fixing element (240) has two recesses (255) for engagement with the pin (230) on different sides of the spring element (210).

4. Wiper arm (110) according to one of the preceding claims, wherein the hose line (140) runs through between the folding axis (205) and the pin (230).

5. Wiper arm (110) according to one of the preceding claims, wherein the guide lever (125) has a cross section with a profile in which the hose line (140) is accommodated.

6. Wiper arm (110) according to one of the preceding claims, wherein the coupling lever (130) can be produced from sheet metal.

7. Method (300) for assembly of a wiper arm (110) according to one of Claims 1 to 7, comprising the following steps:
- providing (305) the mounted functional group consisting of coupling lever (130), guide lever (125), folding joint (135) and spring element (210) ;
- laying (310) the hose line (140) in the region of the folding joint (135); and
- attaching (320, 325) the fixing element (240) in order to separate the hose line (140) axially from the spring element (210),
**characterized by** the following steps:
- engaging (320) the fixing element (240) with the pin (230); and
- latching (325) the fixing element (240) on the coupling lever (130).

## Revendications

1. Bras d'essuie-glace (110), comprenant :
- un levier de couplage (130) à fixer sur un arbre d'essuie-glace (150) ;
- un levier de guidage (125) pour attacher un balai d'essuie-glace (105) ;
- une articulation rabattable (135) avec un axe de rabattement (205) pour relier le levier de guidage (125) au levier de couplage (130) ;
- le levier de couplage (130) présentant un profilé de section transversale en forme de U et une broche (230) s'étendant entre les branches opposées du profilé ;
- un élément faisant ressort (210) en prise avec la broche (230) pour exercer un couple entre le levier de couplage (130) et le levier de guidage (125) par l'intermédiaire de l'articulation rabattable (135) ; et
- un tuyau souple (140) pour faire passer un liquide (170) le long du bras d'essuie-glace (110),
- le tuyau souple (140) et l'élément faisant ressort (210) étant disposés au niveau de l'articulation rabattable (135) dans le profilé du levier de couplage (130),
- un élément de fixation (240) pour la séparation axiale du tuyau souple (140) de l'élément faisant ressort (210) au niveau de l'articulation rabattable (135), dans lequel
- l'élément de fixation (240) est réalisé séparément de sorte que sur un groupe fonctionnel déjà monté, qui comprend le levier de couplage (130), le levier de guidage (125), l'articulation rabattable (135) et l'élément faisant ressort (210), il est possible d'attacher le tuyau souple (140) et l'élément de fixation (240),
**caractérisé en ce que** l'élément de fixation (240) présente un évidement (255) pour venir en prise avec la broche (230).

2. Bras d'essuie-glace (110) selon la revendication 1, dans lequel des éléments d'encliquetage (245) sont prévus sur le levier de couplage (130) ou sur l'élément de fixation (240) pour fixer l'élément de fixation (240) sur le levier de couplage (130).

3. Bras d'essuie-glace (110) selon l'une quelconque des revendications précédentes, dans lequel l'élément de fixation (240) présente deux évidements (255) pour venir en prise avec la broche (230) sur différents côtés de l'élément faisant ressort (210).

4. Bras d'essuie-glace (110) selon l'une quelconque des revendications précédentes, dans lequel le tuyau souple (140) passe entre l'axe de rabattement (205) et la broche (230).

5. Bras d'essuie-glace (110) selon l'une quelconque des revendications précédentes, dans lequel le levier de guidage (125) présente une section transversale avec un profilé dans lequel est reçu le tuyau souple (140).

6. Bras d'essuie-glace (110) selon l'une quelconque des revendications précédentes, dans lequel le levier de couplage (130) peut être fabriqué en tôle.

7. Procédé (300) pour le montage d'un bras d'essuie-glace (110) selon l'une quelconque des revendications 1 à 7, comprenant les étapes suivantes consistant à :
- fournir (305) le groupe fonctionnel monté, composé du levier de couplage (130), du levier de guidage (125), de l'articulation rabattable (135) et de l'élément faisant ressort (210) ;
- poser (310) le tuyau souple (140) au niveau de l'articulation rabattable (135) ; et
- attacher (320, 325) l'élément de fixation (240) pour séparer axialement le tuyau souple (140) de l'élément faisant ressort (210),
**caractérisé par** les étapes suivantes consistant à :
- mettre en prise (320) l'élément de fixation (240) avec la broche (230) ; et
- encliqueter (325) l'élément de fixation (240) sur le levier de couplage (130).
